Europäisches Patentamt

**European Patent Office**

**Office européen des brevets**

(11) Publication number: **0 302 117**
**A1**

(12) **EUROPEAN PATENT APPLICATION**

published in accordance with Art. 158(3) EPC

(21) Application number: **88901471.8**

(22) Date of filing: **09.02.88**

Data of the international application taken as a basis:

(86) International application number:
**PCT/JP88/00123**

(87) International publication number:
**WO88/05717 (11.08.88 88/18)**

(51) Int. Cl.³: **B 29 B 11/14**
**B 29 B 11/08**
**//B29C49/06, B29C49/08,**
**B29C49/22, B29K67/00**

(30) Priority: **09.02.87 JP 27535/87**

(43) Date of publication of application:
**08.02.89 Bulletin 89/6**

(84) Designated Contracting States:
**CH DE FR GB IT LI LU SE**

(71) Applicant: **NISSEI ASB MACHINE CO., LTD.**
**6100-1, Ohazaminamijo Sakakimachi**
**Hanishina-gun Nagano-ken 389-06(JP)**

(72) Inventor: **NAKAMURA, Yoshinori Nissei ASB Mach.**
**Co.Ltd.**
**6100-1, Ohazaminamijo Sakakimachi**
**Hanishina-gun Nagano-ken 389-06(JP)**

(74) Representative: **Schrimpf, Robert et al,**
**Cabinet Regimbeau 26, Avenue Kléber**
**F-75116 Paris(FR)**

(54) **PREFORM FOR BIAXIALLY ORIENTED CONTAINER AND METHOD OF MOLDING THE SAME.**

(57) Preform for a biaxially oriented container consisting primarily of polyethylene terephthalate and molding method thereof. A mouth fastening portion of the preform is formed by a thermoplastic resin having a high heat distortion temperature and the drum and bottom are formed by a multi-layered structure having an intermediate layer made of a thermoplastic resin which is heat resistant or has a high gas barrier property.

FIG. 1

SPECIFICATION

TITLE OF THE INVENTION

PREFORM FOR A BIAXIAL-ORIENTATION CONTAINER AND
METHOD OF MOLDING THE SAME

FIELD OF ART

This invention relates to a preform for a biaxial-
orientation container manufactured by injection orientation
blow molding, and a method of molding the same.

Generally, a biaxial orientation container is manufactured by axially orienting a preform extruded or injection
molded within a mold and laterally expanding it by air pressure.

Biaxial orientation containers formed of a polyethylene
terephthalate as a container material are excellent in shock
strength and transparency as compared with ordinary containers
made by blow molding, have a wide range of utilization as
packing containers and are being used as packing containers
for many food.

However, biaxial orientation containers have a problem
in heat resistance and gas barrier properties. In case of
containers for contents required to be heated and filled,
they are unoriented and therefore, a lip portion poor in heat
resistance is crystallized after a preform has been molded
or a container has been molded, or a resin excellent in heat

- 1 -

resistance is supplemented when a preform is molded to increase the heat resistance. Biaxially oriented body portion and bottom portion are applied with heat treatment after a container has been molded to provide a heat resistance.

In case of contents requiring gas barrier properties, the entire body is formed into a multi-layer when a preform is molded, and the gas barrier properties are increased by a resin layer excellent in gas barrier properties which is present as an intermediate layer. Some products are intended to have the whole heat resistance by said formation of a multi-layer.

However, a multi-layered lip portion is reduced in strength as compared with the case of a single layer and tends to be peeled between layers due to the shock. An outer periphery of the lip portion is sometime peeled by external pressure when a cap is fastened.

Accordingly, in the case where the gas barrier property and heat resistance are intended to be increased by the formation of a multi-layer, it has been said that a preform has to be designed so that a peeling between layers may not occur at least in a lip portion.

## DISCLOSURE OF THE INVENTION

This invention has been achieved in view of the foregoing. An object of this invention is to provide a preform for a biaxial orientation container which can impart not only heat resistance but gas barrier properties to a body portion and a bottom portion, and a method of molding the same.

For achieving the aforesaid object, in a preform according to this invention, a lip portion, a body and a bottom portion are integrally molded by injection molding, all of these being a preform formed of a polyethylene terephthalate, a cap fastening portion in the outer periphery of the lip portion is formed of a thermoplastic resin having a heat deformation temperature higher than a polyethylene terephthalate whose intrinsic viscosity is 0.5 or more, the body portion and bottom portion comprising a multi-layered construction having as an intermediate layer a thermoplastic resin excellent in heat resistance or gas barrier properties.

Molding of the aforementioned preform is carried out by use of insert molding. In molding, injection molding of a short-tube shaped cap fastening portion formed of a heat-resisting thermoplastic resin is first carried out, the cap fastening portion is inserted into a lip molding portion of a preform forming mold, the preform forming mold and a core mold are closed to form a body portion and a bottom forming cavity in the periphery of the core mold and form a lip forming cavity between the core mold and said cap fastening portion, and a required quantity of polyethylene terephthalate is injected into said preform forming mold, after which the same

- 3 -

polyethylene terephthalate and a thermoplastic resin excellent in heat resistance or gas barrier properties are injected simultaneously.

In this invention, as described above, a lip construction of a preform is formed into a double layer and a body portion and a bottom portion are formed into a triple layer to provide a heat resistance of a preform lip portion and to enhance the heat resistance and gas barrier properties of the body portion and bottom portion. Therefore, resins for forming an intermediate layer between the body portion and the bottom portion can be selected to thereby obtain a container excellent in heat resistance or a container excellent in heat resistance and gas barrier properties.

Formation of a lip portion into heat resistance can be made by a cap fastening portion in the outer periphery of the lip portion formed of a thermoplastic resin having a heat resistance, and therefore, the lowering of strength resulting from a peeling liable to be produced when the lip portion is intended to have a heat resistance by the provision of an intermediate layer does not occur, and deformation and brittleness seen when the lip portion is crystallized are not present, and therefore the invention can be applied also to a wide-lip container which has been considered to be difficult to form a lip portion into heat resistance. Further, molding can be carried out continuously and therefore cost is low.

BRIEF DESCRIPTION OF THE DRAWINGS

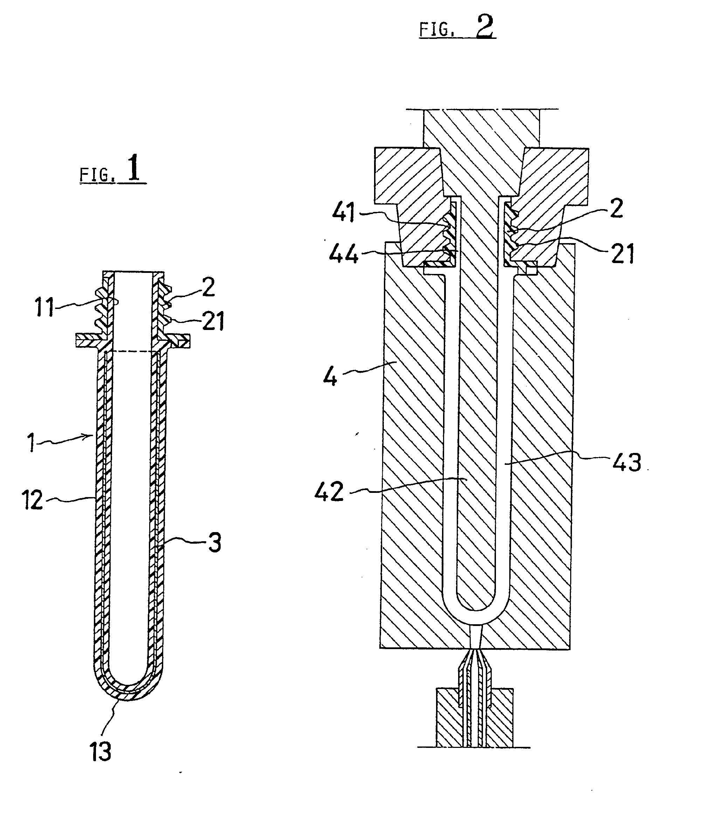

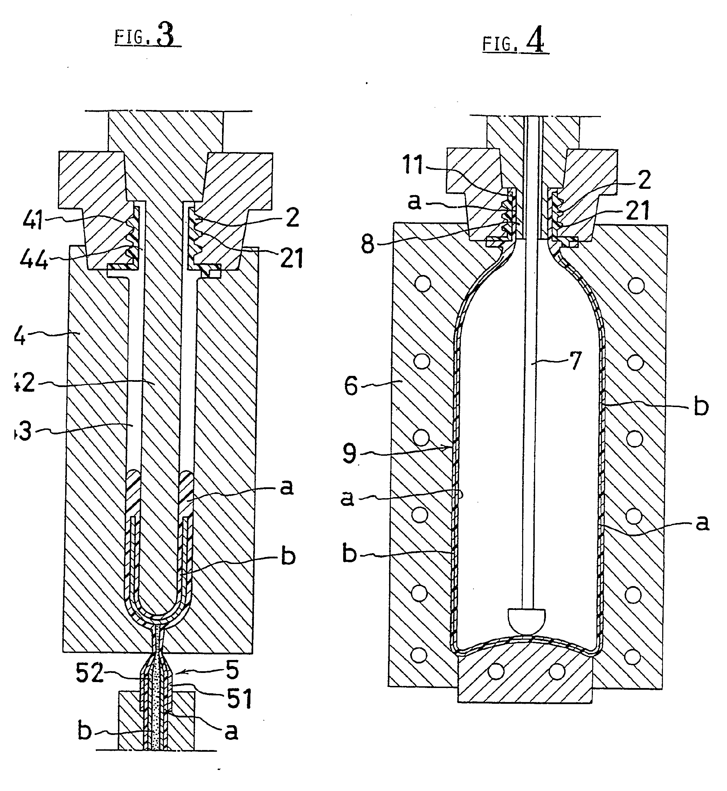

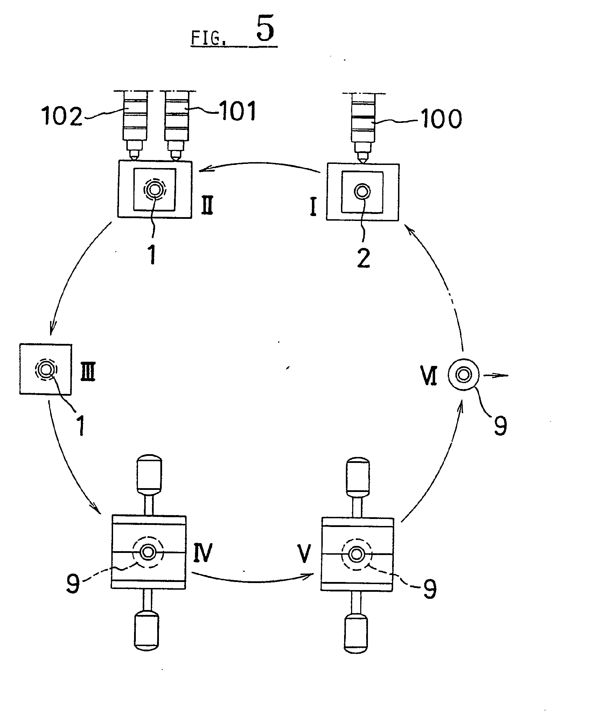

The drawings show a preform for a biaxial orientation container according to this invention and a method of molding the same. FIG. 1 is a longitudinal sectional view of a preform, FIGS. 2 and 3 illustrate the steps of forming a preform; FIG. 4 illustrates the step of molding a bottle; and FIG. 5 illustrates a continuous molding apparatus.

BEST MODE FOR CARRYING OUT THE INVENTION

In the drawings, reference numeral 1 designates an injection-molded preform, and a lip portion 11, a body portion 12 and a bottom portion 13 are integrally formed of polyethylene terephthalate.

The wall thickness of the lip portion 11 is thinner than the body portion 12, and a cap fastening portion 2 in the outer periphery thereof is formed of a heat resisting resin.

Resins used to form the cap fastening portion 2 include thermoplastic resins such as polycarbonate, styrene-acrylonitrile copolymer, polyethylene terephthalate, crystallized polyethylene terephthalate and the like which are high in heat deformation temperature than polyethylene terephthalate whose intrinsic viscosity is 0.5 or more, and a short tubular element injection-molded in advance with a screw 21 is interally provided externally of the lip portion 11 by use of insert molding.

The above-described body portion 12 and bottom portion 13 are of a multi-layer construction having an intermediate layer. Thermoplastic resins used to form the intermediate layer 3 are different according to uses of containers formed from the preform 1 but resins capable of being oriented excellent in heat resistance and gas barrier properties such as polycarbonate, polyamide, an ethylene vinyl alcohol copolymer, an alloy (U polymer) of polyethylene terephthalate and polyamide, an alloy of polyethylene terephthalate and polycarbonate are used.

Next, a method for forming a preform for a bottle requiring the heat resistance and gas barrier properties will be described.

First, the short tubular polycarbonate cap fastening portion 2 injection molded in advance with the screw 21 is inserted into a lip forming cavity 41 of a preform forming mold 4.

Then, a core mold 42 is positioned in the central portion of the preform forming mold 4, after which a mold is opened to form a cavity 43 around the core mold 42, and a lip cavity 44 connected to the cavity 43 is formed between the core mold 42 and the cap fastening portion 2.

After completion of mold clamping, the polyethylene terephthalate and the resin for forming an intermediate layer

- 6 -

are injected into the preform forming mold 4 to form the preform 1.

In forming the preform 1, first, polyethylene terephthalate a in a required quantity enough to form the lip portion 11 is injected and filled into a cavity 43 from an outer nozzle 51 of a double nozzle 5, and then an ethylene vinyl alcohol copolymer b together with the aforesaid polyethylene terephthalate a is injected from an inner nozzle 52.

Thereby, the lip portion 1 is formed merely from the polyethylene terephthalate a, and the polycarbonate cap fastening portion 2 is integrally joined to the outer periphery thereof.

The body portion 12 and bottom portion 13 are formed into a triple layer in which the intermediate layer 3 formed of the polyethylene vinyl alcohol copolymer b is present between the inner and outer layers formed of the polyethylene terephthalate a, to further enhance the gas barrier properties by the provision of the intermediate layer 3 as compared with the case of merely comprising the polyethylene terephthalate a.

In the preform 1 in which the lip construction is of a double layer and the body and bottom constructions are of a triple layer as described above, the body portion 12 and the bottom portion 13 are axially oriented by a rod 7 within a blow mold 6, and then laterally expanded by air from a blow core 8 to form a bottle 9. While the lip portion 11 of the bottle 9 is in the state as injection molded and not oriented, other portions are biaxially oriented. Particularly, the body portion 2 is sufficiently oriented longitudinally and laterally, and as a result, they are well biaxially oriented and increase their shock strength, and even after they have been oriented thinner by the intermediate layer 3, they have excellent gas barrier properties.

The thus oriented blow-molded bottle 9 is removed as it is from the blow mold 6, but if necessary, the blow mold 6 is heated to 130° to 160°C, and simultaneously with blow molding, the body portion 12 and bottom portion 13 can be subjected to heat setting. In the heat set bottle 9, residual stress at the time of molding is removed and density increases so that the bottle becomes difficult to be heat-deformed.

FIG. 5 shows the operation from injection molding of the cap fastening portion 2 to removal of the oriented blow molded bottle 9, showing the respective operating positions for the apparatus capable of continuously carrying out said operation using transfer means such as a turning plate.

The cap fastening portion 2 is injection molded in operating position I with injection apparatus 100 arranged, and immediately after molding, transferred to operating position II with two injection apparatuses 101 and 102 arranged.

In the operating position II, the preform 1 in which the lip construction is of a double layer and the body and bottom portions are of a triple layer is injection molded. The preform 1 after being molded is subjected to temperature control in portions thereof except the lip portion in the operating position III. This temperature control is carried out by inserting the preform 1 into a heated or cooled temperature control pot.

The preform 1 after being controlled in temperature is transferred to the operating position IV and oriented and blown into a bottle 9. If necessary, heat-set treatment is carried out in the operating position IV.

The molded bolt 9 is transferred to the operating position V, where the heat-set bolt 9 is subjected to cooling treatment. This cooling treatment is carried out by putting the bottle 9 into a cooling mold having a cavity of the same shape as that of the bottle 9, blowing air into the bottle to apply internal pressure and placing a wall of the bottle in contact with the mold.

Finally, the bottle 9 is transferred to the operating position VI, where the bottle 9 is ejected by the transfer means. Accordingly, if such means is used, the operation from the injection molding of the cap fastening portion to the removal of the bottle can be continuously carried out.

INDUSTRIAL APPLICABILITY

According to this invention, a cap fastening portion in the outer periphery of a lip portion is formed of a thermoplastic resin having a high heat deformation temperature, and a body portion and a bottom portion are of a multi-layered construction having an intermediate layer fromed of a thermoplastic resin excellent in heat resistance or gas barrier properties. Therefore, the strength of the lip portion is further enhance despite the multi-layered construction and both heat-resisting and gas barrier properties can be provided. Therefore, this invention has a variety of uses, and molding can be accomplished with utilization of an insert molding. So, molding is simpler than the case where a lip portion is crystallized after molding and other portions are heat-treated, thus being extremely effective in terms of industry and being widely utilized.

CLAIMS

(1)    A preform for a biaxial orientation container, the
preform comprising a lip portion, a body and a bottom portion
which are integrally molded by injection molding, all of these
beig formed of a polyethylene terephthalate, characterized
in that a cap fastening portion in the outer periphery of
the lip portion is formed of a thermoplatic resin higher in
heat deformation temperature than a polyethylene terephthalate
whose intrinsic viscosity is 0.5 or more, and the body portion
and the bottom portion are comprised of a multi-layer construction having as an intermediate layer a thermoplastic resin
excellent in heat resistance and gas barrier properties.

(2)    A preform for a biaxial orientation container according
to Claim 1, wherein the thermoplastic resin for forming said
cap fastening portion comprises a polycarbonate, a styrene-
acrylonitrile copolymer, a polyethylene terephthalate, and
a crystallized polyethylene terephthalate.

(3)    A preform for a biaxial orientation container according
to Claim 1, wherein the thermoplastic resin for forming said
intermediate layer comprises a polycarbonate, a polyamide,
an ethylene vinyl alcohol copolymer, and an alloy of polyethylene terephthalate and polyamide or polycarbonate.

- 11 -

(4)    A method for molding a preform for a biaxial orientation container comprising preceding injection-molding of a short tubular cap fastening portion formed of a heat resistant thermoplastic resin, inserting the cap fastening portion into a lip molding portion of a preform forming mold, closing the preform forming mold and a core mold to form a body portion and bottom portion molding cavity around the core mold and form a lip molding cavity between the core mold and said cap fastening portion, injecting a required quantity of polyethylene terephthalate into said preform forming mold, after which simultaneously injecting the same polyethylene terephthalate and a thermoplastic resin excellent in heat resistance or gas barrier properties, and injection molding a preform of a multi-layer construction having an intermediate layer in which the cap fastening portion in the outer periphery of the lip portion has the heat resistance and the body portion and bottom portion are excellent in heat resistance or gas barrier properties.

FIG. 2

FIG. 1

FIG. 3

FIG. 4

FIG. 5

# INTERNATIONAL SEARCH REPORT

International Application No PCT/JP88/00123

## I. CLASSIFICATION OF SUBJECT MATTER (if several classification symbols apply, indicate all) 6

According to International Patent Classification (IPC) or to both National Classification and IPC

Int.Cl⁴    B29B11/14, 11/08//B29C49/06, 49/08, 49/22, B29K67:00

## II. FIELDS SEARCHED

### Minimum Documentation Searched 7

| Classification System | Classification Symbols |
|---|---|
| IPC | B29B11/08, 11/14, B29C49/06-08, 49/20-22 |

### Documentation Searched other than Minimum Documentation to the Extent that such Documents are Included in the Fields Searched 8

| | | |
|---|---|---|
| Jitsuyo Shinan Koho | 1950 | 1988 |
| Kokai Jitsuyo Shinan Koho | 1971 | 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 59-39528 (Aoki Katashi) 3 March 1984 (03. 03. 84) & US, A, 4507258 & DE, A, 2129364 & GB, A, 2129364 | 1-2, 4 |
| Y | JP, A, 58-149242 (Toyo Seikan Kaisha, Ltd.) 5 May 1983 (05. 05. 83) (Family: none) | 1-2, 4 |
| Y | JP, A, 57-128520 (Toyobo Co., Ltd.) 10 August 1982 (10. 08. 82) & US, A, 4535901 & DE, A, 3201986 | 1, 3 |
| Y | JP, A, 59-199237 (Toyo Seikan Kaisha, Ltd.) 12 November 1984 (12. 11. 84) & AU, A, 8427438 & GB, A, 2141970 | 1, 3-4 |
| Y | JP, A, 55-79232 (Toppan Printing Co., Ltd.) 14 June 1980 (14. 06. 80) (Family: none) | 1, 3-4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 22, 1988 (22. 04. 88) | May 2, 1988 (02. 05. 88) |
| International Searching Authority | Signature of Authorized Officer |
| Japanese Patent Office | |

Form PCT ISA-210 (second sheet) (January 1985)